# EUROPEAN PATENT SPECIFICATION

(11) **EP 3 285 373 B1**
(45) Date of publication and mention of the grant of the patent: **11.11.2020**
(21) Application number: 16780043.2
(22) Date of filing: 12.04.2016
(51) Int. Cl.: H02K 3/52, F16H 1/32, H02K 5/22, H02K 11/33, B60S 1/26, H02K 7/116

(54) **MOTOR WITH SPEED REDUCER, AND REAR WIPER MOTOR**
MOTOR MIT UNTERSETZUNGSGETRIEBE UND HINTERER WISCHERMOTOR
MOTEUR À RÉDUCTEUR DE VITESSE, ET MOTEUR D'ESSUIE-GLACE ARRIÈRE

(30) Priority: 13.04.2015 JP 2015081792; 13.04.2015 JP 2015081793
(43) Date of publication of application: 21.02.2018
(60) Divisional application: 18212996.5
(73) Proprietor: Mitsuba Corporation, Kiryu-shi Gunma 376-8555 (JP)
(72) Inventor: TOKIZAKI Teppei, Kiryu-shi Gunma 376-8555 (JP); TAMURA Satoshi, Kiryu-shi Gunma 376-8555 (JP); TAMURA Natsumi, Kiryu-shi Gunma 376-8555 (JP); TANAKA Hiroto, Kiryu-shi Gunma 376-8555 (JP)
(74) Representative: Cabinet Laurent & Charras
(86) International application number: PCT/JP2016/061813
(87) International publication number: WO 2016/167252

(56) References cited:
- EP-A2- 2 475 079
- JP-A- 2001 132 593
- JP-A- 2008 206 373
- JP-A- 2010 187 460
- JP-A- 2014 128 182
- JP-U- H0 216 576
- JP-U- H0 480 258
- JP-U- S6 391 390
- US-A1- 2007 261 191
- US-A1- 2009 050 420
- US-A1- 2009 050 420

## Description

### [Technical Field]

The present invention relates to a motor with a speed reducer, and a rear wiper motor.

Priority is claimed on Japanese Patent Application Nos. 2015-081792 and 2015-081793, filed April 13, 2015,

### [Background Art]

For example, a motor with a speed reducer is used as a drive source configured to drive a wiper of a vehicle. The motor with the speed reducer includes a motor actuated by a power supply such as a battery or the like mounted on the vehicle, a speed reducer configured to reduce and output rotation of the motor, and an output shaft connected to the speed reducer and the wiper.

In the speed reducer, a worm deceleration mechanism may be frequently employed due to the fact that a reduction ratio is large, a self-lock function is provided, or the like. Then, while the motor is connected to a worm shaft of the worm deceleration mechanism, an output shaft is connected to a worm wheel.

In addition, for example, various electric driving apparatuses driven by electric motors are mounted on the vehicle. The motor with the speed reducer is frequently used as the electric motor. The motor with the speed reducer includes a motor actuated by a power supply such as a battery mounted on the vehicle or the like, a speed reducer configured to reduce and output rotation of the motor, and an output shaft connected to the speed reducer and the driven body. As the speed reducer is provided in this way, a large torque can be obtained while suppressing output of the motor (for example, see Patent Literature 2).

Further, a brushless motor may be employed in the motor. The brushless motor has no brush configured to perform supply of power to a stator winding, and selectively performs supply of power to a desired stator winding via a board on which a switch element and so on are mounted. For this reason, there is a need to detect a rotation angle of a rotor of the brushless motor. An element configured to detect the rotation angle is mounted on the board. As the brushless motor is employed, a rotation angle and a rotational speed of the rotor of the motor can be precisely controlled (for example, see Patent Literature 3).

Patent Literature 4 discloses a wiper motor with a speed reducer according to the conventional art.

### [Citation List]

### [Patent Literature]

[Patent Literature 1]
   Japanese Unexamined Patent Application, First Publication No. 2007-302038
[Patent Literature 2]
   International Publication No. 2012-029634
[Patent Literature 3]
   Japanese Unexamined Patent Application, First Publication No. 2000-4566
[Patent Literature 4]
   EP2475079A2

### [Summary of Invention]

### [Technical Problem]

However, in the above-mentioned related art, a motor shaft of the motor is perpendicular to an axial direction of the output shaft. For this reason, the motor may protrude from the speed reducer, and there is a problem that flattening of the motor with the speed reducer may be difficult and layout characteristics of the motor with the speed reducer may deteriorate.

In addition, it is difficult to provide a configuration in which a planar shape seen from the axial direction of the output shaft has a symmetrical shape. For this reason, for example, when the motor with the speed reducer is to be attached in a restricted space of a vehicle body, it may be necessary to vary a positional relation between the speed reducer and the motor according to a car type. Accordingly, there is a problem that a manufacturing cost of the motor with the speed reducer may increase.

Further, when the brushless motor as disclosed in Patent Literature 3 is employed in the motor in Patent Literature 2, disposition space of the board should be ensured. Therefore, there is a problem that the size of the motor with the speed reducer may be increased.

In addition, when the driving of the driven body is to be precisely controlled, there is a need to observe the rotation angle of the output shaft of the motor with the speed reducer. In this case, electronic parts configured to observe the rotation angle should also be mounted on the board. Here, when the element configured to detect a rotation angle of the rotor, the electronic parts configured to observe a rotation angle of the output shaft, and so on, are concentrated on one board, the board is increased in size, and layout characteristics also deteriorate. Accordingly, the motor with the speed reducer may be further increased in size.

Further, if a position of the board is restricted, for example, when the board is connected to the winding drawn from the stator of the motor, a drawing direction of the winding is also restricted. In addition, even if a plurality of boards are used, when the plurality of boards are electrically connected by wirings or the like, wiring work becomes troublesome. As a result, assembly work of the brushless motor also becomes troublesome.

Here, in consideration of the above-mentioned circumstances, the present invention provides a motor with a speed reducer and a rear wiper motor that have high versatility while achieving flattening and improving layout characteristics.

In addition, the present invention provides a motor with a speed reducer and a rear wiper motor that are capable of facilitating assembly work while precisely performing driving control and achieving reduction in size.

### [Solution to Problem]

According to a first aspect of the present invention, a motor with a speed reducer includes a motor received in a motor housing; a speed reducer received in the motor housing and that is driven by receiving power from a motor shaft of the motor and that reduces rotation of the motor shaft and outputs the reduced rotation; and a drive shaft received in the motor housing, connected to an output shaft of the speed reducer via a power transmitter and that drives a driven body, wherein the motor shaft and the output shaft are disposed coaxially, and the output shaft and the drive shaft are disposed parallel in a radial direction.

According to the above-mentioned configuration, the motor with the speed reducer can be flattened and layout characteristics can be improved to an extent that the drive shaft and the output shaft are not arranged in the axial direction.

According to a second aspect of the present invention, in the motor with the speed reducer according to the first aspect of the present invention, the motor housing is formed to be symmetrical with respect to an arbitrary straight line passing through an axis of the drive shaft when seen from an axial direction of the drive shaft.

According to the above-mentioned configuration, for example, in the case in which the motor with the speed reducer is mounted on the vehicle body, when a change of an attachment direction of the motor with the speed reducer is needed according to a car type, a shape of the motor housing in a plan view when seen from an axis of the drive shaft can always be the same without wastefully increasing the size of the motor with the speed reducer. For this reason, layout characteristics of the motor with the speed reducer can be improved and versatility can be increased.

According to a third aspect of the present invention, in the motor with the speed reducer according to the first or second aspect of the present invention, the motor housing is formed in a box shape having an opening section formed in one surface thereof, an inner side surface of the motor housing is formed to have an opening area that is reduced from the opening section toward a bottom wall via a step difference section, and the motor, the speed reducer and the power transmitter are sequentially received in the motor housing from the bottom wall side.

According to the above-mentioned configuration, the motor, the speed reducer and the power transmitter can be assembled from one direction of the motor housing on the side of the opening section. In addition, since the power transmitter is disposed closest to the opening section of the motor housing, the power transmitter and the drive shaft can be easily assembled. For this reason, assemblability of the motor with the speed reducer can be improved.

According to a fourth aspect of the present invention, in the motor with the speed reducer according to any one of the first to third aspects of the present invention, the motor is constituted by a brushless motor.

According to the above-mentioned configuration, since there is no need to form a space configured to dispose a brush as in a motor with a brush, the motor with the speed reducer can be miniaturized and flattened to that extent.

According to a fifth aspect of the present invention, in the motor with the speed reducer according to any one of the first to fourth aspects of the present invention, the speed reducer is constituted by a hypocycloid mechanism.

According to the above-mentioned configuration, the speed reducer can be flattened while securing a high reduction ratio. For this reason, the motor with the speed reducer can be miniaturized and flattened as a whole.

According to a sixth aspect of the present invention, in the motor with the speed reducer according to any one of the first to fifth aspects of the present invention, the power transmitter is constituted by a transmission belt.

According to the above-mentioned configuration, the structure of the power transmitter can be simplified, and there is no need to secure an extra space around the drive shaft. For this reason, the motor with the speed reducer can be miniaturized.

According to a seventh aspect of the present invention, in the motor with the speed reducer according to the sixth aspect of the present invention, a clutch mechanism is installed in at least one of a space between the power transmitter and the output shaft and a space between the power transmitter and the drive shaft.

According to the above-mentioned configuration, even when an external force is applied to the driven body, reverse rotation of the motor can be prevented.

According to an eighth aspect of the present invention, in the motor with the speed reducer according to the seventh aspect of the present invention, a toothed section is formed on an inner surface of the transmission belt, a pulley that is able to be meshed with the toothed section is formed integrally with the drive shaft, and the toothed section of the transmission belt and the pulley function as the clutch mechanism.

According to the above-mentioned configuration, the structure of the clutch mechanism can be simplified.

According to a ninth aspect of the present invention, in the motor with the speed reducer according to the eighth aspect of the present invention, a restriction section that restricts a range of a rotation angle of the pulley is formed in at least one of the pulley and the motor housing.

According to the above-mentioned configuration, rotation of the driven body (for example, a wiper or the like) beyond a predetermined range due to an external force can be prevented.

According to a tenth aspect of the present invention, a motor with a speed reducer includes a casing divided into two parts of a first housing and a second housing; a motor received in the casing; and a speed reducer received in the casing and that reduces rotation of the motor and outputs the reduced rotation, wherein a conduction section is formed on an inner side surface of the first housing to be laid along the inner side surface, and a connecting section into which an end portion of the conduction section is able to be inserted is formed on an inner side surface of the second housing.

In this case, like an eleventh aspect of the present invention, boards configured to drive the motor may be installed on the inner side surface of the first housing and the inner side surface of the second housing.

According to the above-mentioned configuration, the board disposed in the first housing and the board disposed in the second housing can be easily electrically connected by the conduction section and the connecting section when the boards or the like are disposed in the first housing and the second housing.

In addition, for example, as the boards are disposed in the housings, driving control of the motor with the speed reducer can be precisely performed.

Further, since the conduction section is laid, for example, the board and the winding drawing from the stator of the motor can also be connected via the conduction section. For this reason, since a degree of freedom of the winding in the drawing direction is increased, assembly workability of the motor with the speed reducer can be improved.

Then, one board can be miniaturized and layout characteristics can be increased since a plurality of (for example, 2) boards can be prepared. For this reason, there is no need to secure extra disposition space to dispose the boards, and the motor with the speed reducer can be miniaturized.

According to a twelfth aspect of the present invention, in the motor with the speed reducer according to the eleventh aspect of the present invention, includes a drive shaft received in the casing, connected to an output shaft of the speed reducer via a power transmitter and that drives a driven body, wherein a motor shaft of the motor and an output shaft of the speed reducer are disposed coaxially, the output shaft and the drive shaft are disposed parallel in a radial direction, one board is installed at either of the first housing and the second housing and disposed at a position facing the drive shaft, and another board is installed at the other of the first housing and the second housing and disposed at a position corresponding to a rotor of the motor.

According to the above-mentioned configuration, the motor with the speed reducer can be flattened to an extent that the drive shaft and the output shaft are not arranged in the axial direction.

In addition, since the boards installed in the housings separately observe a rotation angle of the drive shaft and a rotation angle of the rotor, an increase in size of the boards can be suppressed. For this reason, the motor with the speed reducer can be miniaturized while precisely performing driving control of the motor with the speed reducer.

According to a thirteenth aspect of the present invention, in the motor with the speed reducer according to the twelfth aspect of the present invention, the motor is a brushless motor, and the board installed at the other of the first housing and the second housing and disposed at the position corresponding to the rotor of the motor has a detection element mounted thereon and that detects a rotation angle of the rotor.

According to the above-mentioned configuration, driving control of the motor with the speed reducer can be more precisely performed.

According to a fourteenth aspect of the present invention, in the motor with the speed reducer according to any one of the tenth to thirteenth aspects of the present invention, the stator of the motor and the conduction section are connected to each other via a knife switch.

According to the above-mentioned configuration, connecting work between the conduction section and the stator of the motor can be easily performed.

According to a fifteenth aspect of the present invention, a rear wiper motor is characterized by using the motor with the speed reducer according to any one of the first to fourteenth aspects of the present invention in order to drive a rear wiper of a vehicle.

According to the above-mentioned configuration, a rear wiper motor having high versatility while achieving flattening and improving layout characteristics can be provided.

In addition, a rear wiper motor capable of achieving miniaturization and facilitating assembly work while precisely performing driving control can be provided.

### [Advantageous Effects of Invention]

According to the present invention, the motor with the speed reducer and the wiper motor can be flattened and layout characteristics can be improved to an extent that the drive shaft and the output shaft are not arranged in the axial direction.

In addition, the board disposed in the first housing and the board disposed in the second housing can be easily electrically connected by the conduction section and the connecting section while the boards and so on are disposed in the first housing and the second housing.

In addition, driving control of the motor with the speed reducer can be precisely performed by disposing, for example, the boards in the housings.

Further, since the conduction section is laid, the board can also be connected to the winding drawn from the stator of the motor via, for example, the conduction section. For this reason, since a degree of freedom of the winding in the drawing direction is increased, assembly workability of the motor with the speed reducer can be improved.

In this case, one board can be miniaturized and layout characteristics can be increased to an extent that the plurality of (for example, two) boards are prepared. For this reason, there is no need to secure extra disposition space to dispose the boards, and the motor with the speed reducer can be miniaturized.

### [Brief Description of Drawings]

Fig. 1 is a longitudinal cross-sectional view of a wiper motor according to a first embodiment of the present invention.
Fig. 2 is an exploded perspective view of the wiper motor according to the first embodiment of the present invention.
Fig. 3 is a view seen from an arrow A of Fig. 1.
Fig. 4 is a perspective view showing a motor housing according to the first embodiment of the present invention from an opening section side.
Fig. 5 is a plan view showing the motor housing according to the first embodiment of the present invention from the opening section side.
Fig. 6 is a perspective view of a housing cover according to the first embodiment of the present invention.
Fig. 7 is a view for describing an insertion state of a connector according to the first embodiment of the present invention.
Fig. 8 is a plan view of a motor unit according to the first embodiment of the present invention.
Fig. 9 is a perspective view of a stator according to the first embodiment of the present invention.
Fig. 10 is a perspective view of a male terminal of a knife switch according to the first embodiment of the present invention.
Fig. 11 is a perspective view showing a connecting structure of the knife switch according to the first embodiment of the present invention in detail.
Fig. 12 is a plan view showing a speed reducer according to the first embodiment of the present invention from the motor unit side.
Fig. 13 is a plan view showing the speed reducer of the first embodiment of the present invention from an opposite side of the motor unit.
Fig. 14 is a side view showing a transmission system from a drive gear to a drive shaft according to the first embodiment of the present invention.
Fig. 15 is a view seen from an arrow B of Fig. 14.
Fig. 16 is a plan view showing a speed reducer according to a second embodiment of the present invention from a motor unit side.
Fig. 17 is a plan view showing the speed reducer according to the second embodiment of the present invention from a motor housing on the side of an opening section.
Fig. 18 is a plan view of a link mechanism according to a third embodiment of the present invention.
Fig. 19 is a plan view of a sector gear mechanism according to a fourth embodiment of the present invention.

### [Description of Embodiments]

Hereinafter, embodiments of the present invention will be described with reference to the accompanying drawings.

### (First embodiment)

### (Wiper motor)

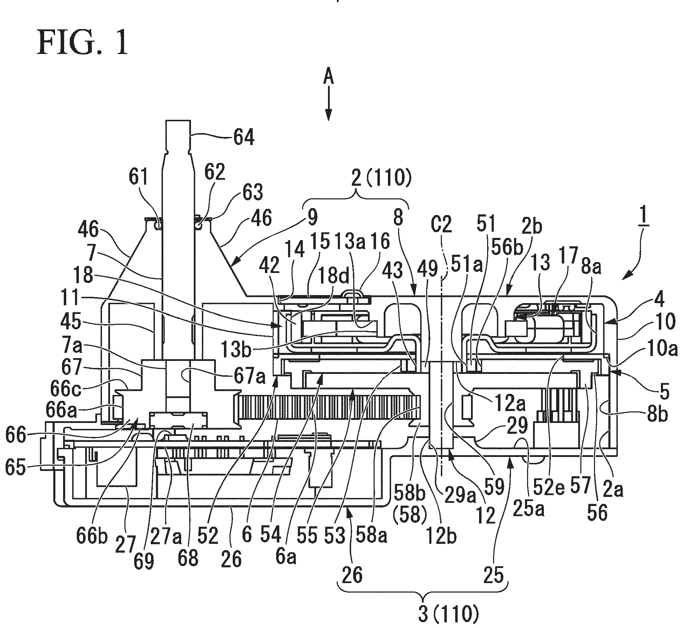

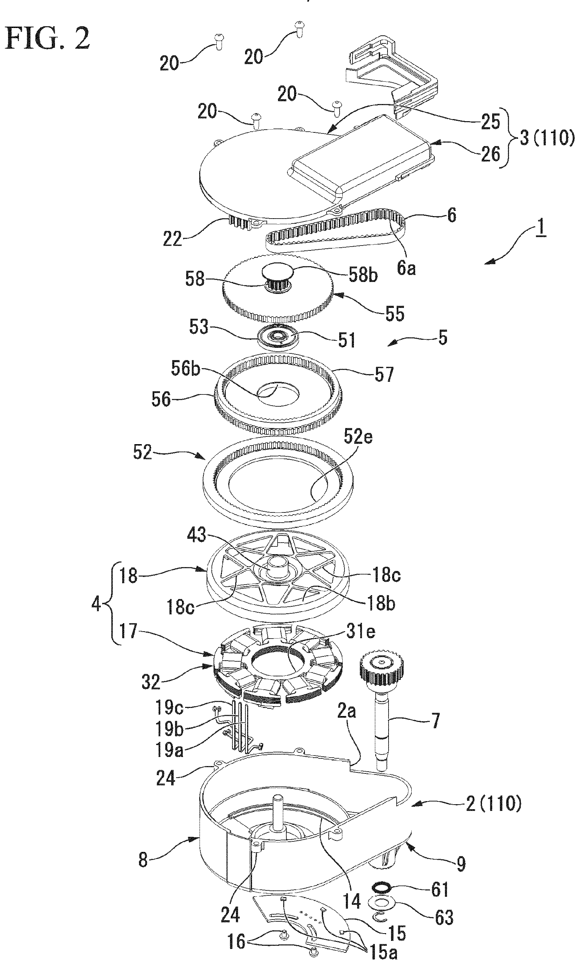

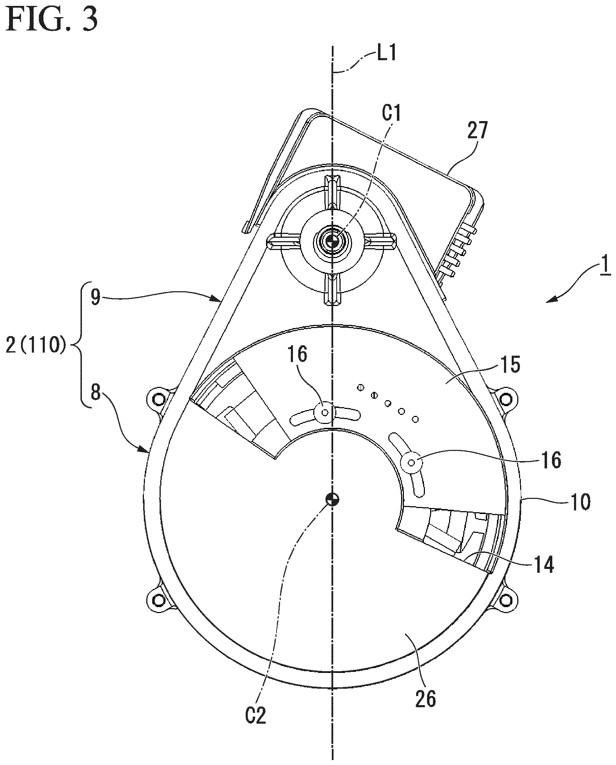

Fig. 1 is a longitudinal cross-sectional view of a wiper motor 1. Fig. 2 is an exploded perspective view of the wiper motor 1. Fig. 3 is a view seen from an arrow A of Fig. 1.

As shown in Figs. 1 to 3, the wiper motor 1 is a driving apparatus for pivoting a wiper arm of rear wipers (neither of which is shown) mounted on a vehicle. The wiper motor 1 is installed on a back door or the like of the vehicle. The wiper motor 1 includes a casing 110, and a motor unit 4, a speed reducer 5, a transmission belt 6 and a drive shaft 7, which are received in the casing 110. The casing 110 is configured to be divided into two parts, i.e., a box-shaped motor housing 2 having an opening section 2a formed in one surface thereof, and a housing cover 3 configured to close the opening section 2a of the motor housing 2.

### (Motor housing)

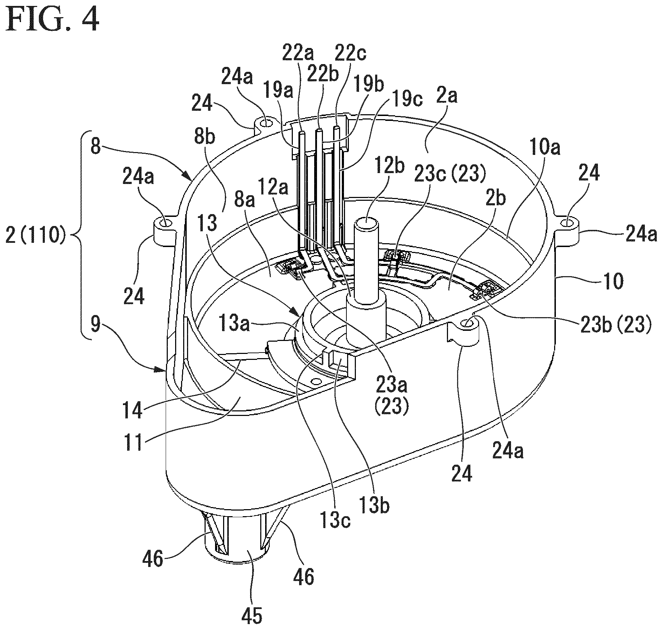

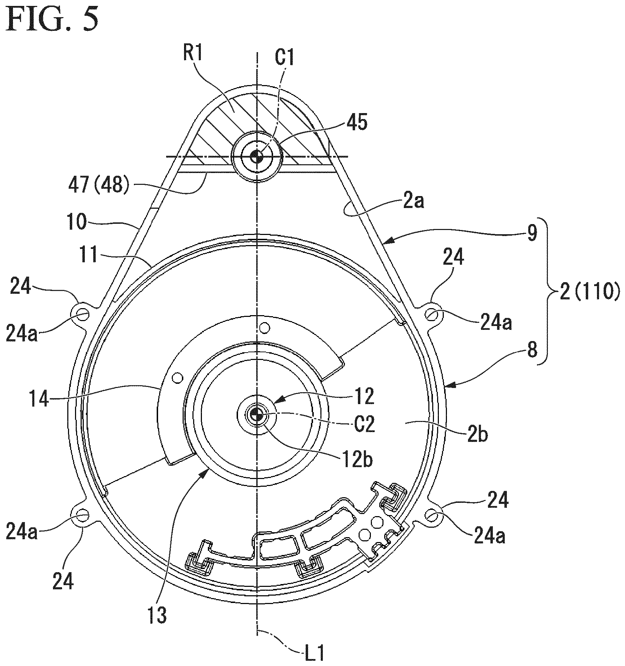

Fig. 4 is a perspective view showing the motor housing 2 from the opening section 2a side. Fig. 5 is a plan view showing the motor housing 2 from the opening section 2a side.

As shown in Figs. 1 and 3 to 5, the motor housing 2 has a housing main body 8 having a substantially circular shape when seen in a plan view, and a subsidiary housing 9 protruding from one side of the housing main body 8, which are formed integrally with each other. A sidewall 10 of the motor housing 2 is formed to continue to an outer circumferential section of the housing main body 8 and an outer circumferential section of the subsidiary housing 9. Four mounting seats 24 configured to fasten and fix the motor housing 2 and the housing cover 3 using bolts 20 (see Fig. 2) are integrally formed at a circumferential edge of the opening section 2a of the sidewall 10. Through-holes 24a through which the bolts 20 can be inserted are formed in the mounting seats 24.

A step difference section 10a is formed in an inner side surface of the sidewall 10 at a place corresponding to the housing main body 8. Accordingly, in the inner side surface at the place corresponding to the housing main body 8, an opening area of the opening section 2a is reduced toward a bottom wall 2b via the step difference section 10a. In addition, an inner wall 11 having substantially an arc shape when seen in a plan view and extending along an outer diameter of the housing main body 8 from the step difference section 10a toward the subsidiary housing 9 is formed at the housing main body 8. The inner wall 11 is formed to stand up from the bottom wall 2b, and formed such that a height thereof is equal to a height of the step difference section 10a.

In addition, a support shaft 12 is vertically installed at substantially a center of the housing main body 8 in the radial direction on the bottom wall 2b of the housing main body 8 side. Further, a cylindrical section 13 is vertically installed to surround the support shaft 12.

The support shaft 12 is formed to have a diameter-reduced section 12b having a diameter reduced via a step difference section 12a from a center part of thereof closer to a base end side toward a tip thereof in the axial direction.

In addition, the height of the cylindrical section 13 is set to be smaller than the height of the step difference section 12a of the support shaft 12. A diameter-reduced section 13b is formed in an outer circumferential surface of the cylindrical section 13 at a tip side via a step difference section 13a. The cylindrical section 13 is an area to which a stator 17 (to be described below) of the motor unit 4 is fixed. A locking protrusion 13c configured to restrict relative rotation of the stator 17 with respect to the cylindrical section 13 is formed on an outer circumferential surface of the diameter-reduced section 13b of the cylindrical section 13 in the axial direction. In addition, the plurality of (for example, 3) locking protrusions 13c are formed to be disposed in the circumferential direction at equal intervals.

Further, an opening section 14 curved in substantially a fan shape is formed in the bottom wall 2b on the side of the housing main body 8 to surround the cylindrical section 13. A sensor board 15 configured to perform rotation control of the motor unit 4 is attached to the opening section 14 by screws 16. A detection element 15a (see Fig. 2) configured to detect a rotation angle of a rotor 18 (to be described below) of the motor unit 4 is mounted on the sensor board 15.

Here, a motor receiving section 8a configured to receive the motor unit 4 is formed further inside than the inner wall 11 of the housing main body 8 in the radial direction. In addition, an upper side of a tip of the inner wall 11 and an upper side of the step difference section 10a of the sidewall 10 become the speed reducer receiving section 8b configured to receive the speed reducer 5.

In addition, three terminals 19a, 19b and 19c are laid on the inner surface of the housing main body 8. The terminals 19a, 19b and 19c are installed from the opening section 2a to the bottom wall 2b along the inner side surface.

More specifically, the terminals 19a, 19b and 19c are formed to extend from the opening section 2a to the bottom wall 2b in the axial direction, are then curved along the bottom wall 2b, and further, extend to positions corresponding to male terminals 23d, 23e and 23f of three phases installed on the stator 17 (to be described below). End portions of the terminals 19a, 19b and 19c adjacent to the opening section 2a are male terminals 22a, 22b and 22c that can be connected to a connector 22 installed on the housing cover 3. Meanwhile, end portions on the side of the bottom wall 2b are female terminals 23a, 23b and 23c that constitute a knife switch 23.

In addition, a support cylinder 45 configured to rotatably support the drive shaft 7 is formed integrally with the bottom wall 2b on the side of the subsidiary housing 9 to protrude from both surfaces of the bottom wall 2b. That is, an axial center C1 of the support cylinder 45 is parallel to an axial center C2 of the support shaft 12 of the housing main body 8.

A plurality of (for example, 4) ribs 46 are formed integrally with the outer circumferential surface of the support cylinder 45 at positions protruding toward an outer side of the subsidiary housing 9 (an opposite side of the opening section 2a of the motor housing 2). The ribs 46 are disposed in the circumferential direction at equal intervals. Stiffness of the support cylinder 45 is achieved by the ribs 46.

In addition, a restriction wall 47 is vertically installed somewhat closer to the housing main body 8 than the axial center C1 of the support cylinder 45 on the inner surface side of the bottom wall 2b on the side of the subsidiary housing 9. The restriction wall 47 is installed in a direction perpendicular to a straight line L1 that connects the axial center C1 of the support cylinder 45 and the axial center C2 of the support shaft 12. That is, the restriction wall 47 is constituted by two walls to bridge the outer circumferential surface of the support cylinder 45 and the inner side surface of the sidewall 10 of the motor housing 2.

Here, the restriction wall 47 constitutes a portion of a rotation restriction section 48 configured to restrict a rotation range of the drive shaft 7, and a region (a hatched region in Fig. 5) surrounded by the restriction wall 47 and the sidewall 10 on the side of the subsidiary housing 9 is a restriction region R1. Further, the rotation restriction section 48 will be described below in detail.

As shown in Figs. 3 and 5 in detail, the motor housing 2 formed in this way is formed such that an appearance when seen from a direction of the axial center C1 of the support cylinder 45 (the axial center C2 of the support shaft 12) is symmetrical with respect to the straight line L1.

### (Housing cover)

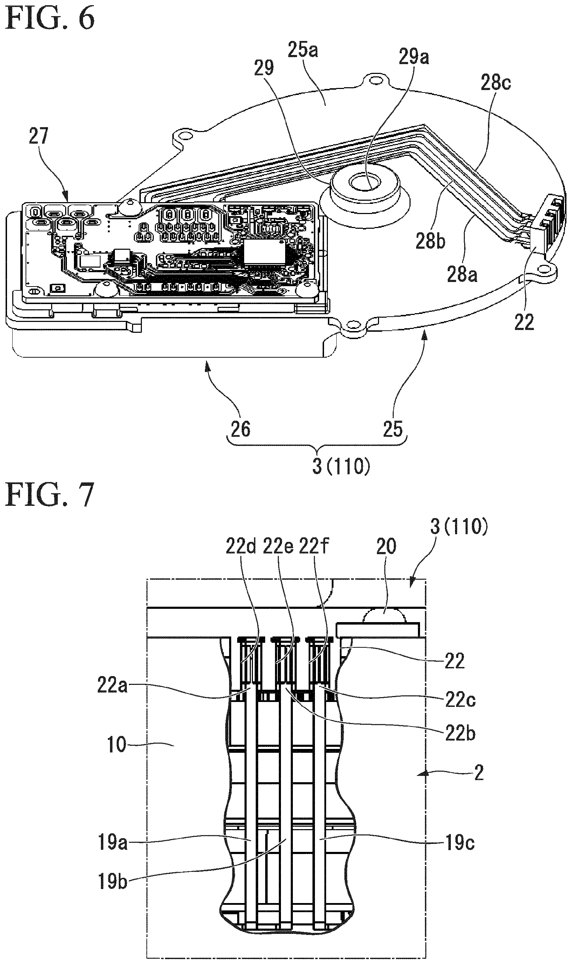

Fig. 6 is a perspective view of the housing cover 3.

As shown in Figs. 1, 2 and 6, the housing cover 3 has a cover main body 25 having substantially a disk shape and configured to close most of the opening section 2a of the motor housing 2 on the side of the housing main body 8, and a driver receiving section 26 protruding from one side of the cover main body 25 and in which an operation driver 27 is received while closing a portion of the housing main body 8 and the subsidiary housing 9.

A support boss 29 is formed to protrude from the cover main body 25 on the side of an inner surface 25a at substantially a center in the radial direction. An insertion concave section 29a is formed at a center of the support boss 29 in the radial direction. As shown in Fig. 1 in detail, in a state in which the housing cover 3 is attached to the motor housing 2, a tip of the diameter-reduced section 12b formed in the motor housing 2 is inserted into the insertion concave section 29a. Accordingly, whirling of the support shaft 12 is prevented.

In addition, the connector 22 is formed on the cover main body 25 on the side of the inner surface 25a at a position corresponding to the male terminals 22a, 22b and 22c installed on the side of the motor housing 2.

Then, as shown in Fig. 7, in a state in which the housing cover 3 is attached to the motor housing 2, the male terminals 22a, 22b and 22c of the motor housing 2 are inserted into female terminals 22d, 22e and 22f of the connector 22.

Further, as shown in Fig. 6, three terminals 28a, 28b and 28c are laid on the cover main body 25 on the side of the inner surface 25a to bridge the connector 22 and the driver receiving section 26.

The driver receiving section 26 is formed to protrude to the side of an outer surface 25b of the cover main body 25. Then, the driver receiving section 26 is formed in a substantially rectangular parallelepiped box shape such that the cover main body 25 is opened on the side of the inner surface 25a. The operation driver 27 is received in the driver receiving section 26 formed in this way.

The operation driver 27 is configured to drive the motor unit 4 by supplying a predetermined current to the motor unit 4 at a predetermined timing. In addition, the operation driver 27 is a driver in which a switch element such as a field effect transistor (FET) or the like, a noise prevention element such as a condenser or the like, an integrated circuit (IC), and so on are mounted on an epoxy board 27a. The operation driver 27 is configured to be connected to connectors (neither of which is shown) extending from the outside. Further, one ends of the terminals 28a, 28b and 28c are connected to the operation driver 27. Accordingly, the operation driver 27 and the connector 22 are electrically connected via the terminals 28a, 28b and 28c.

### (Motor unit)

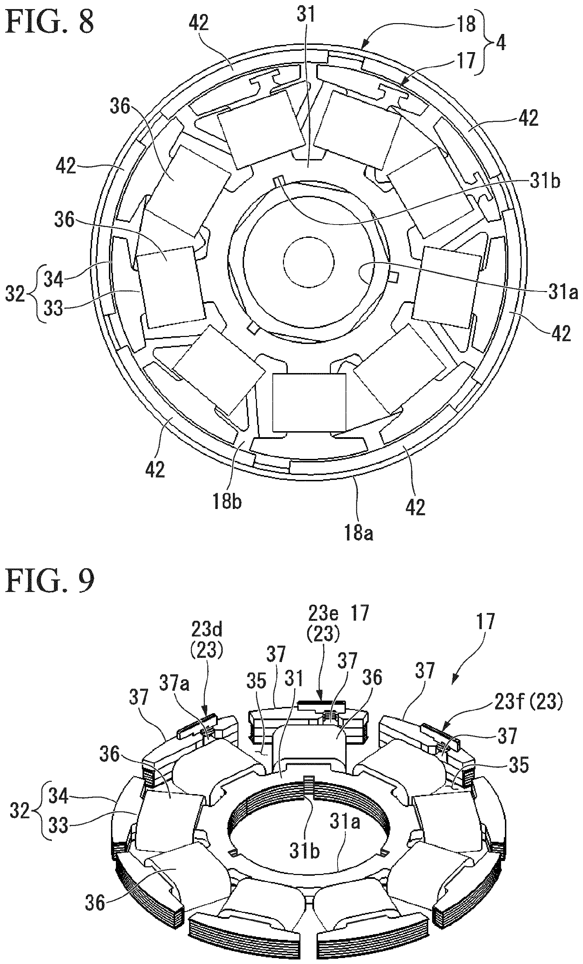

Fig. 8 is a plan view of the motor unit 4. Fig. 9 is a perspective view of the stator 17.

As shown in Figs. 1, 2, 8 and 9, the motor unit 4 is a so-called outer rotor type brushless motor. The motor unit 4 is constituted by the stator 17, and the rotor 18 formed to cover the stator 17 from the side of the opening section 2a of the motor housing 2.

The stator 17 has an annular stator core 31. The stator core 31 is formed by stacking plate members formed of a magnetic material in the axial direction or pressing a soft magnetic powder. A through-hole 31a through which the diameter-reduced section 13b of the cylindrical section 13 protruding from the motor housing 2 can be inserted is formed in a center of the stator core 31 in the radial direction.

As the cylindrical section 13 is inserted into the through-hole 31a and an end surface of the stator core 31 abuts the step difference section 13a of the cylindrical section 13, the stator core 31 is positioned and fixed to the motor housing 2. Then, the stator 17 is in a state in which it is received in the motor receiving section 8a of the motor housing 2. In addition, locking grooves 31b into which the locking protrusions 13c formed on the diameter-reduced section 13b can be inserted are formed in the through-hole 31a. The number of the locking grooves 31b is set to a plural number (for example, 3) to correspond to the number of the locking protrusions 13c.

In addition, a plurality of (for example, 9) tooth sections 32 radially extending outward in the radial direction are formed on the stator core 31. Each of the tooth sections 32 is formed in substantially a T shape when seen in a plan view, and has a tooth main body 33 extending in the radial direction and a flange section 34 extending from a tip of the tooth main body 33 in the circumferential direction, which are formed integrally. Slots 35 are formed between the tooth sections 32. Windings 36 are wound on the tooth main bodies 33 via the slots 35.

Here, the tooth sections 32 are allocated in sequence of a U phase, a V phase and a W phase in the circumferential direction. That is, the windings 36 wound on the tooth sections 32 have a 3-phase structure of the U phase, the V phase and the W phase.

Terminal holders 37 formed by the simply protruding flange sections 34 are formed integrally with the three predetermined tooth sections 32 arranged in the circumferential direction at an end surface of the flange section 34 on the side of the bottom wall 2b of the motor housing 2. Concave sections 37a are formed in the terminal holders 37 on one end side in the circumferential direction, and the male terminals 23d, 23e and 23f that constitute the knife switch 23 are set to the concave sections 37a.

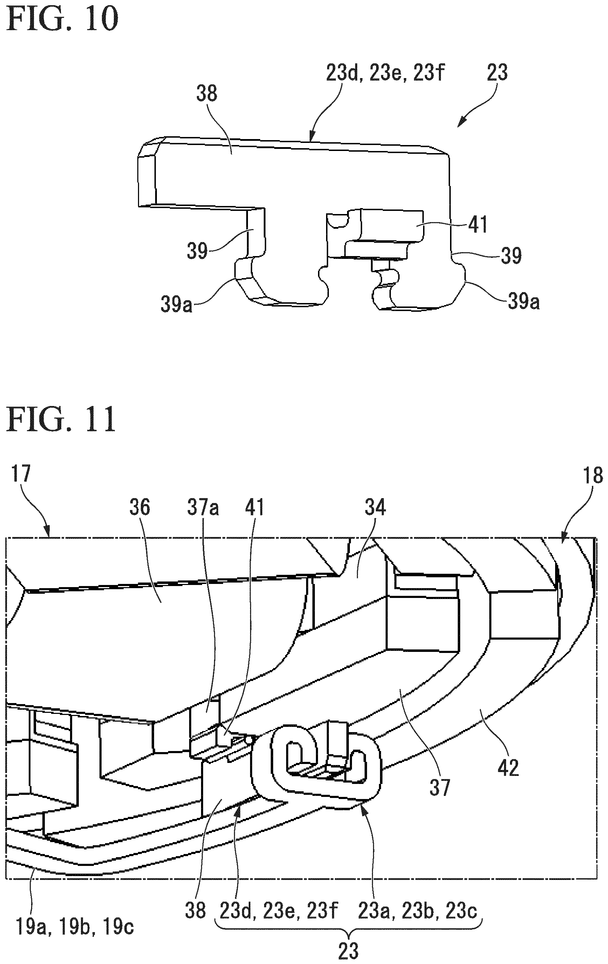

Fig. 10 is a perspective view of the male terminal 23d, 23e or 23f of the knife switch 23. Further, since the male terminals 23d, 23e and 23f have the same shape, in Fig. 10, only one male terminal (23d, 23e or 23f) is shown and described.

As shown in Fig. 10, each of the male terminals 23d, 23e and 23f has a terminal main body 38. A pair of attachment leg sections 39 protruding toward the stator 17 are formed integrally with the terminal main body 38. The pair of attachment leg sections 39 are provided to fix the male terminals 23d, 23e and 23f onto the stator 17 when the attachment leg sections 39 are inserted into the concave sections 37a. Convex sections 39a are formed integrally with the pair of attachment leg sections 39 at sides opposite to the sides facing each other. The convex sections 39a are pressed against the inner side surfaces of the concave sections 37a, and the male terminals 23d, 23e and 23f are fixed onto the stator 17.

In addition, a winding piece 41 bent inward in the radial direction of the stator 17 is integrally formed between the pair of attachment leg sections 39. One end of the corresponding winding 36 is hung on the winding piece 41. Accordingly, the windings 36 of the U phase, the V phase and the W phase are electrically connected to the corresponding male terminals 23d, 23e and 23f.

Fig. 11 is a perspective view showing a connecting structure of the knife switch 23 (23a to 23f) in detail.

As shown in Figs. 1 and 11, when the stator 17 is attached to the cylindrical section 13 of the motor housing 2, the male terminals 23d, 23e and 23f of the stator 17 are inserted into the female terminals 23a, 23b and 23c of the terminals 19a, 19b and 19c of the motor housing 2. Accordingly, the knife switch 23 is electrically connected. Further, the winding 36 and the operation driver 27 are electrically connected via the knife switch 23, the terminals 19a, 19b and 19c, and the terminals 28a, 28b and 28c of the housing cover 3.

Returning to Figs. 1, 2 and 8, the rotor 18 is formed in a substantially bottomed cylindrical shape, and an opening section 18d is disposed to be directed toward the bottom wall 2b of the motor housing 2. A plurality of (6) magnets 42 are disposed on a circumferential wall 18a of the rotor 18 on the side of the inner circumferential surface. In addition, the magnets 42 are disposed at equal intervals such that magnetic poles are disposed alternately in the circumferential direction. The sensor board 15 installed on the bottom wall 2b of the motor housing 2 is disposed such that the detection element 15a corresponds to a circumferential edge of the opening section 18d of the rotor 18. Accordingly, a variation in magnetic flux of the magnets 42 of the rotor 18 can be detected by the detection element 15a, and a rotation angle of the rotor 18 can be detected.

Further, a cylindrical rotor boss 43 protruding toward the opening section 2a of the motor housing 2 is formed integrally with a bottom wall 18b of the rotor 18 at a center in the radial direction. An inner diameter of the rotor boss 43 is set to be substantially equal to or slightly larger than an outer diameter of the support shaft 12 of the motor housing 2. The support shaft 12 is inserted into the rotor boss 43, and the rotor 18 is rotatably supported by the support shaft 12.

In addition, the tip of the rotor boss 43 protrudes farther than the step difference section 12a of the support shaft 12 and extends to reach the diameter-reduced section 12b. Then, a ball bearing 49 is installed between the rotor boss 43 and the diameter-reduced section 12b. The tip of the rotor boss 43 is supported rotatably with respect to the diameter-reduced section 12b via the ball bearing 49.

Further, the speed reducer 5 is attached to a place (a tip) of the rotor boss 43 on which the ball bearing 49 is installed. In addition, a plurality of holes 18c are formed in the bottom wall 18b of the rotor 18 between the rotor boss 43 and the outer circumferential section (the circumferential wall 18a). Reduction in weight of the rotor 18 is achieved by the holes 18c.

### (Speed reducer)

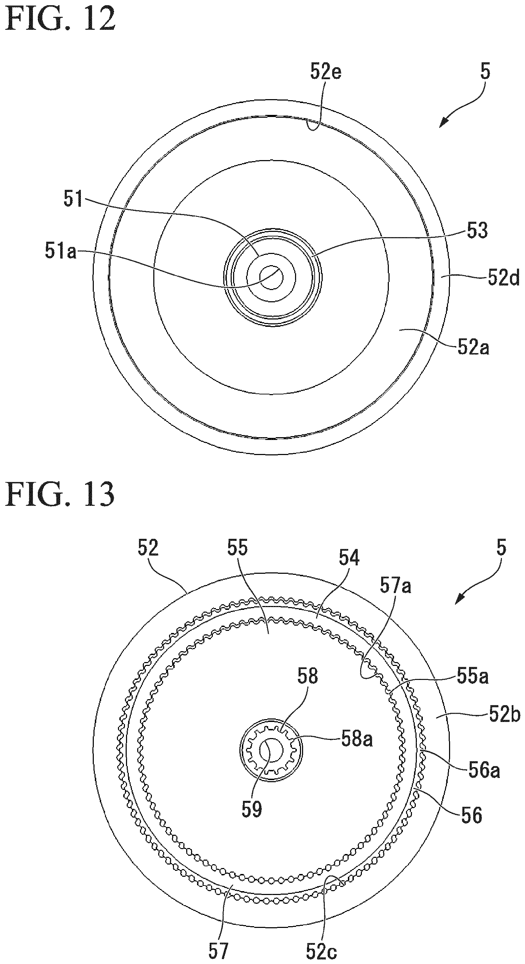

Fig. 12 is a plan view showing the speed reducer 5 from the motor unit 4 side. Fig. 13 is a plan view showing the speed reducer 5 from an opposite side of the motor unit 4.

As shown in Figs. 1, 2, 12 and 13, the speed reducer 5 is disposed on the motor unit 4 coaxially with the motor unit 4, and received in a speed reducer receiving section 8b of the motor housing 2. The speed reducer 5 is configured as a so-called 2-stage speed reducing hypocycloid mechanism. The speed reducer 5 has a substantially disk-shaped eccentric section 51 fitted and fixed onto the tip of the rotor boss 43, an internal gear 52 fixed to the motor housing 2, an inner gear 54 attached to the eccentric section 51 via a ball bearing 53, and a drive gear 55 configured to reduce and output rotation of the inner gear 54.

A through-hole 51a into which the rotor boss 43 is press-fitted is formed in the eccentric section 51. As the rotor boss 43 is fitted and fixed to the through-hole 51a, the rotor 18 and the eccentric section 51 are integrally rotated.

In addition, the outer circumferential surface of the eccentric section 51 is formed in a circular shape in the axial direction in a plan view about a position eccentric with the axial center C2 of the support shaft 12 (a rotation axis of the rotor 18) as a center (hereinafter, the center is referred to as an eccentric center). For this reason, the outer circumferential surface of the eccentric section 51 is rotated eccentrically with respect to the axial center C2 of the support shaft 12.

The internal gear 52 is formed in a bottomed cylindrical shape, and a cuttout surface 52d having a dug-out form due to a step difference is formed at an outer circumferential section of a bottom wall 52a. In a state in which the cutout surface 52d is placed on the step difference section 10a and the inner wall 11 of the motor housing 2, the internal gear 52 is fixed in the motor housing 2 (the speed reducer receiving section 8b).

In addition, an opening section 52e is formed in most of the center of the internal gear 52 in the radial direction. The tip of the rotor boss 43 and the eccentric section 51 protrudes toward an opposite side of the motor unit 4 via the opening section 52e. Further, a circumferential wall 52b of the internal gear 52 has inner teeth 52c formed on an inner circumferential surface thereof at a position on a circle concentric with the support shaft 12 of the motor housing 2.

The inner gear 54 has a substantially disk-shaped external gear section 56 received inside the circumferential wall 52b of the internal gear 52 in the radial direction and a ring-shaped internal gear section 57 integrally formed on the external gear section 56. Outer teeth 56a that can be meshed with the inner teeth 52c of the internal gear 52 are formed on the outer circumferential surface of the external gear section 56. Meanwhile, inner teeth 57a that can be meshed with outer teeth 55a (to be described below) of the drive gear 55 are formed on the inner circumferential surface of the internal gear section 57.

In addition, a bearing hole 56b is formed in the external gear section 56 at substantially a center in the radial direction. An outer circumferential surface of the eccentric section 51 is rotatably fitted into the bearing hole 56b via the ball bearing 53. Accordingly, the inner gear 54 is revolvably supported about the axial center C2 of the support shaft 12 (the rotation axis of the rotor boss 43 of the rotor 18) and rotatably supported about the eccentric center of the eccentric section 51.

The drive gear 55 is formed in substantially a disk shape, and received inside the internal gear section 57 of the inner gear 54 in the radial direction. An output shaft 58 is formed integrally with one surface of the drive gear 55 opposite to the motor unit 4 at a center in the radial direction. Then, a through-hole 59 is formed to pass through the output shaft 58 and the drive gear 55 in the axial direction. The diameter-reduced section 12b of the support shaft 12 is inserted into the through-hole 59. Accordingly, the drive gear 55 and the output shaft 58 rotate about the axial center C2 of the support shaft 12 (the rotation axis of the rotor boss 43 of the rotor 18).

The outer teeth 55a that can be meshed with the inner teeth 57a of the inner gear 54 are formed on the outer circumferential surface of the drive gear 55. Meanwhile, outer teeth 58a are formed on the outer circumferential surface of the output shaft 58. The transmission belt 6 is engaged with the outer teeth 58a. In addition, a flange section 58b is formed at the tip of the output shaft 58. The transmission belt 6 can be prevented from falling off of the output shaft 58 by the flange section 58b.

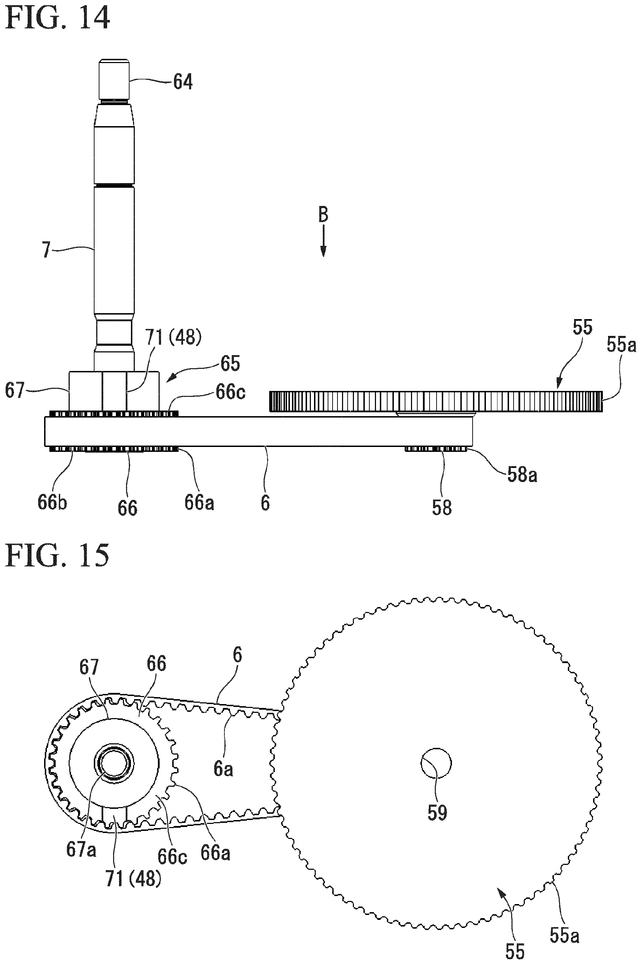

Fig. 14 is a side view showing a transmission system from the drive gear 55 to the drive shaft 7. Fig. 15 is a view seen from an arrow B of Fig. 14.

As shown in Figs. 1, 14 and 15, the transmission belt 6 is configured to transmit a rotating force of the output shaft 58 to the drive shaft 7. The transmission belt 6 has inner teeth 6a formed on an inner circumferential surface thereof. As the inner teeth 6a are meshed with the outer teeth 58a of the output shaft 58, the transmission belt 6 rotates with respect to the output shaft 58 without slipping.

### (Drive shaft)

The drive shaft 7 is inserted into the support cylinder 45 installed in the subsidiary housing 9 of the motor housing 2. That is, the drive shaft 7 is disposed to be parallel to the rotation axis of the rotor 18 (the rotation axis of the rotor boss 43) and the rotation axis of the output shaft 58.

In addition, a length of the drive shaft 7 is set to a length at which both ends of the drive shaft 7 protrude from both ends of the support cylinder 45 in the axial direction.

As shown in Fig. 1, an O-ring groove 61 is formed in an end portion (hereinafter, simply referred to as an outer end) of the support cylinder 45 protruding toward an outer side of the subsidiary housing 9 at an inner circumferential edge. The O-ring 62 is mounted in the O-ring groove 61. Accordingly, sealability in the support cylinder 45 between an outer end of the subsidiary housing 9 and the drive shaft 7 is secured.

In addition, a slip washer 63 is mounted on the drive shaft 7 at a position corresponding to an O-ring 62. The O-ring 62 is prevented from falling off of the motor housing 2 by the slip washer 63. Further, a spline 64 is formed at the outer end of the drive shaft 7. A wiper arm (not shown) is attached to the spline 64.

As shown in Figs. 1, 14 and 15, a pulley 65 is attached to an inner end of the drive shaft 7. The pulley 65 has a pulley main body 66 having outer teeth 66a and a substantially columnar attachment boss 67 protruding from the pulley main body 66 toward the drive shaft 7, which are formed integrally.

A spline concave section 67a configured to receive the inner end of the drive shaft 7 is formed in the attachment boss 67. For example, a spline 7a is formed at the inner end of the drive shaft 7. Accordingly, the drive shaft 7 and the pulley 65 are spline-fitted, and both of the drive shaft 7 and the pulley 65 are integrated and rotated.

In a state in which the pulley 65 is attached to the drive shaft 7, the end portion of the attachment boss 67 abuts the inner end of the support cylinder 45. In this way, positioning of the drive shaft 7 with respect to the support cylinder 45 in the axial direction is performed by the attachment boss 67 and the slip washer 63.

In addition, in a state in which the drive shaft 7 is attached to the support cylinder 45, positions of the pulley main body 66 and the output shaft 58 in the axial direction are equal to each other. Accordingly, the transmission belt 6 is engaged with the pulley main body 66. Then, as the outer teeth 66a of the pulley main body 66 are meshed with the inner teeth 6a of the transmission belt 6, the transmission belt 6 rotates with respect to the pulley main body 66 without slipping.

In addition, in a state in which the drive shaft 7 is attached to the support cylinder 45, an end surface 66b of the pulley main body 66 opposite to the attachment boss 67 faces the operation driver 27. A sensor magnet 68 is attached to the end surface 66b of the pulley main body 66 at substantially a center in the radial direction. Meanwhile, an element 69 configured to detect a magnetic flux of the sensor magnet 68 is mounted on the epoxy board 27a of the operation driver 27 at a position facing the sensor magnet 68. A rotation angle of the drive shaft 7 is detected by the sensor magnet 68 and the element 69. Further, for example, a Hall IC or the like is used as the element 69.

In addition, a restriction convex section 71 is formed integrally with an end surface 66c of the pulley main body 66 on the side of the attachment boss 67.

Here, in a state in which the drive shaft 7 is attached to the support cylinder 45, the restriction convex section 71 of the pulley main body 66 is disposed in the restriction region R1 of the motor housing 2 shown in Fig. 5. In addition, the restriction convex section 71 and the restriction wall 47 of the motor housing 2 are set to a height at which they interfere with each other. That is, the pulley main body 66 is configured such that the restriction convex section 71 can rotate only within a range that is movable in the restriction region R1. In this way, the restriction convex section 71 and the restriction wall 47 are configured as the rotation restriction section 48 to restrict a rotation range of the pulley 65 (the drive shaft 7).

### (Assembly sequence of wiper motor)

Next, an assembly sequence of the wiper motor 1 will be described.

First, the stator 17 of the motor unit 4 and the rotor 18 are separately assembled, and then the stator core 31 having the through-hole 31a is inserted into the cylindrical section 13 from the opening section 2a side of the motor housing 2. Then, the end surface of the stator core 31 abuts the step difference section 13a of the cylindrical section 13. Here, simultaneously with insertion into the diameter-reduced section 13b, the corresponding male terminals 23d, 23e and 23f of the stator core 31 are inserted into the female terminals 23a, 23b and 23c of the knife switch 23 installed on the bottom wall 2b of the motor housing 2.

Further, a position of the locking protrusion 13c formed on the cylindrical section 13 and a position of the locking groove 31b formed in the stator 17 are set to positions at which the female terminals 23a, 23b and 23c and the male terminals 23d, 23e and 23f of the knife switch 23 can be connected.

Next, the rotor boss 43 of the rotor 18 is inserted into the diameter-reduced section 13b of the cylindrical section 13 from the opening section 2a side of the motor housing 2. Here, the eccentric section 51 is previously assembled with the tip of the rotor boss 43, and then the rotor 18 is inserted into the diameter-reduced section 13b such that the eccentric section 51 is directed toward the opening section 2a of the motor housing 2.

Next, the speed reducer 5 is received in the speed reducer receiving section 8b of the motor housing 2. Specifically, first, the bottom wall 52a of the internal gear 52 is directed toward the opening section 2a of the motor housing 2, and the bottom wall 52a is placed on the step difference section 10a and the inner wall 11 of the motor housing 2. Next, the inner gear 54 is assembled, and further, the diameter-reduced section 12b of the support shaft 12 is inserted into the through-hole 59 of the drive gear 55 from above the inner gear 54. Here, the output shaft 58 formed integrally with the drive gear 55 is inserted toward the opening section 2a of the motor housing 2.

Next, the drive shaft 7 is attached to the subsidiary housing 9 of the motor housing 2. The pulley 65 is previously spline-fitted into the spline 7a of the drive shaft 7. Then, the spline 64 opposite to the pulley 65 of the drive shaft 7 is directed toward the support cylinder 45 from the opening section 2a side of the motor housing 2, and the drive shaft 7 is inserted into the support cylinder 45. After the drive shaft 7 is inserted into the support cylinder 45, the slip washer 63 is attached from the spline 64 side, and attachment of the drive shaft 7 to the subsidiary housing 9 is completed.

Next, the transmission belt 6 is attached between the output shaft 58 of the speed reducer 5 and the pulley 65 of the drive shaft 7.

In this way, as the motor unit 4, the speed reducer 5 and the transmission belt 6 are sequentially assembled from one direction of the motor housing 2 on the side of the opening section 2a, the motor unit 4, the speed reducer 5 and the transmission belt 6 are received in the motor housing 2.

Next, the housing cover 3 is attached to the opening section 2a of the motor housing 2. Here, the housing cover 3 is attached such that the tip of the diameter-reduced section 12b of the support shaft 12 is inserted into the insertion concave section 29a formed in the support boss 29 of the housing cover 3. In addition, the housing cover 3 is attached such that the male terminals 22a, 22b and 22c of the terminals 19a, 19b and 19c installed in the motor housing 2 are connected to the female terminals 22d, 22e and 22f of the connector 22. Accordingly, assembly of the wiper motor 1 is completed.

### (Operation of wiper motor)

Next, an operation of the wiper motor 1 will be described.

When an output signal from a control unit (for example, an ECU), which is not shown, is supplied to the operation driver 27 while power is supplied to the operation driver 27 from an external power supply (not shown), a predetermined current is supplied to the motor unit 4 at a predetermined timing, and the rotor 18 of the motor unit 4 is rotated. A rotation angle of the rotor 18 is detected by the sensor board 15 installed in the motor housing 2. A detection result from the sensor board 15 is output to the control unit (not shown) as a signal.

When the rotor 18 is rotated, the eccentric section 51 integrated with the rotor 18 is rotated. Then, the inner gear 54 performs swing movement (orbital motion) while meshed with the internal gear 52 and the drive gear 55. In addition, the inner gear 54 performs rotation movement at a rotation number (the number of rotations) that is reduced to be smaller than the revolution number by meshing with the internal gear 52. Then, the reduced rotation movement of the inner gear 54 is transmitted to the drive gear 55, and the drive gear 55 is rotated at the rotation number that is reduced to be smaller than the rotation number of the rotor 18.

The rotation of the drive gear 55 is transmitted to the transmission belt 6 via the output shaft 58, and further transmitted to the pulley 65. When the pulley 65 is rotated, the drive shaft 7 integrated with the pulley 65 is rotated, and a wiper arm (not shown) attached to the drive shaft 7 is driven.

Here, the rotation angle of the pulley 65 (the drive shaft 7) detected by the sensor magnet 68 installed on the pulley 65 and the element 69 of the operation driver 27 is output to the control unit as a signal. The control unit outputs the signal such that the drive shaft 7 is rotated normally or rotated in reverse within a predetermined rotation range. Then, the motor unit 4 is driven to repeat the normal rotation and the reverse rotation on the basis of the output signal of the control unit.

Further, the predetermined rotation range of the drive shaft 7 is a range in which the restriction convex section 71 formed in the pulley 65 can move within the restriction region R1 of the motor housing 2. That is, for example, even when an external force is applied to the wiper arm and the drive shaft 7 tries to rotate beyond the predetermined rotation range, the restriction convex section 71 of the pulley 65 abuts the restriction wall 47 of the motor housing 2, and displacement of the wiper arm beyond the predetermined rotation range is prevented.

In addition, when the drive shaft 7 is driven within the predetermined rotation range, and for example, an external force is applied to the wiper arm and a reverse rotation force acts on the drive shaft 7, a direction in which the pulley 65 (the drive shaft 7) rotates is opposite to a direction in which the transmission belt 6 rotates. In this case, the transmission belt 6 is elastically deformed and the inner teeth 6a of the transmission belt 6 rides over the outer teeth 66a of the pulley 65, and thus a meshed position between the inner teeth 6a and the outer teeth 66a deviates. For this reason, application of a load (a reverse rotation force) to the motor unit 4 by an external force to the wiper arm is prevented. That is, the inner teeth 6a of the transmission belt 6 and the pulley 65 function as a clutch mechanism configured to prevent an overload to the motor unit 4.

In this way, in the above-mentioned first embodiment, while the rotation axis of the rotor 18 of the motor unit 4 (the rotation axis of the rotor boss 43) is disposed coaxially with the rotation axis of the output shaft 58, the drive shaft 7 is disposed to be parallel to the rotation axis of the rotor 18 and the rotation axis of the output shaft 58. For this reason, the wiper motor 1 can be flattened and layout characteristics can be improved since the output shaft 58 and the drive shaft 7 are not arranged in the axial direction.

In addition, the motor housing 2 is formed such that an appearance in a direction of the axial center C1 of the support cylinder 45 (the axial center C2 of the support shaft 12) is symmetrical with respect to the straight line L1 (see Fig. 5). For this reason, for example, when the wiper motor 1 is attached to a back door or the like of the vehicle or the like, even when the wiper motor 1 is attached at any angle around the drive shaft 7 to which the wiper arm (not shown) is attached, the motor housing 2 is always symmetrical with respect to the straight line L1. In other words, even when an attachment direction of the wiper motor 1 is varied according to a car type, a planar shape of the motor housing 2 in a direction of the axial center C1 can always be equal without wastefully increasing the size of the wiper motor 1. For this reason, layout characteristics of the wiper motor 1 can be improved, and versatility can be increased.

Further, the step difference section 10a is formed on the inner side surface of the motor housing 2 at a place corresponding to the housing main body 8. Accordingly, in the inner side surface at the place corresponding to the housing main body 8, an opening area of the opening section 2a is reduced toward the bottom wall 2b via the step difference section 10a. Then, a space of the housing main body 8 further inside than the inner wall 11 in the radial direction is made as the motor receiving section 8a configured to receive the motor unit 4, and a space above the tip of the inner wall 11 and above the step difference section 10a of the sidewall 10 is made as the speed reducer receiving section 8b configured to receive the speed reducer 5.

For this reason, the motor unit 4, the speed reducer 5 and the transmission belt 6 can be sequentially assembled from the opening section 2a side of the motor housing 2. That is, the motor unit 4, the speed reducer 5 and the transmission belt 6 can be assembled from only one direction of the motor housing 2. For this reason, assemblability of the wiper motor 1 can be improved.

In addition, since the transmission belt 6 can be disposed at a side of the motor housing 2 closest to the opening section 2a, assemblability of the transmission belt 6 finally assembled in the motor housing 2 or the pulley 65 (the drive shaft 7) to which the transmission belt 6 is attached can be improved.

Further, since the motor unit 4 is configured as a brushless motor, there is no need to provide a space in which a brush is disposed, as in a motor with a brush. To that extent, reduction in size and flattening of the wiper motor 1 can be achieved.

In addition, since the speed reducer 5 is configured as a hypocycloid mechanism, the speed reducer 5 can be flattened while securing a high reduction ratio. For this reason, the wiper motor 1 can be miniaturized and flattened as a whole.

The transmission belt 6 is employed as a means configured to transmit power to the drive shaft 7 from the speed reducer 5. In this way, since the means configured to transmit power to the drive shaft 7 from the speed reducer 5 is simplified, the wiper motor 1 can be miniaturized without unnecessary parts being disposed around the drive shaft 7.

In addition, the inner teeth 6a of the transmission belt 6 and the pulley 65 function as a clutch mechanism configured to prevent an overload to the motor unit 4. For this reason, even when an external force is applied to the drive shaft 7, reverse rotation of the motor unit 4 can be prevented, damage or the like to the motor unit 4 can be prevented, and the clutch mechanism can be provided to have a simple structure.

Further, the rotation restriction section 48 configured to restrict the rotation range of the pulley 65 (the drive shaft 7) is constituted by the restriction wall 47 formed on the motor housing 2 and the restriction convex section 71 formed in the pulley 65. For this reason, for example, even when an external force is applied to the wiper arm and the drive shaft 7 tries to rotate beyond the predetermined rotation range, displacement of the wiper arm beyond the predetermined rotation range is prevented. Accordingly, reliability of the wiper motor 1 can be improved.

In addition, the terminals 19a, 19b and 19c are installed on the inner surface of the motor housing 2. Meanwhile, the connector 22 is installed on the housing cover 3. In this case, the terminals 19a, 19b and 19c are configured to be connected to the connector 22 by simply overlapping the motor housing 2 and the housing cover 3. For this reason, while the sensor board 15 configured to perform rotation control of the motor unit 4 is installed on the motor housing 2, the operation driver 27 configured to supply current to the motor unit 4 or detect a rotation angle of the drive shaft 7 can be installed on the housing cover 3.

More specifically, as the terminals 19a, 19b and 19c are installed in the motor housing 2, a drawing direction of the winding 36 wound on the stator 17 (a direction in which the knife switch 23 is disposed) can be set at the side of the bottom wall 2b of the motor housing 2.

Here, the motor unit 4 is a so-called outer rotor type brushless motor, and the rotor 18 is formed to cover the stator 17. For this reason, when the bottom wall 18b of the rotor 18 is disposed in the drawing direction of the winding 36, the rotor 18 and the winding 36 interfere with each other. For this reason, the opening section 18d of the rotor 18 is directed toward the bottom wall 2b of the motor housing 2, and the sensor board 15 is installed on the bottom wall 2b. Here, since the terminals 19a, 19b and 19c are installed in the motor housing 2, the operation driver 27 with functions other than those of the sensor board 15 can be disposed on the housing cover 3 opposite to the winding 36 in the drawing direction.

In this way, since the sensor board 15 and the operation driver 27 having different roles can be separately installed, an increase in size of the sensor board 15 or the operation driver 27 can be suppressed. In addition, there is no need to secure extra space to dispose the sensor board 15 or the operation driver 27. Accordingly, the motor with the speed reducer can be miniaturized.

In addition, connecting work between terminals 19, 19b and 19c and the operation driver 27 (the terminals 28a, 28b and 28c) is performed via the connector 22. Further, connecting work between the terminals 19a, 19b and 19c and the winding 36 is performed via the knife switch 23. For this reason, the connecting work can be easily performed.

In addition, as the brushless motor is employed as the motor unit 4, driving control of the motor unit 4 can be precisely performed. For this reason, quality of the wiper motor 1 can be improved. Further, since there is no need to provide space to dispose a brush or the like in comparison with a so-called a motor with a brush, the motor unit 4 can be miniaturized as a whole.

In addition, since the element 69 configured to detect a rotation angle of the drive shaft 7 is mounted on the operation driver 27, a rotation angle of the drive shaft 7 can also be precisely controlled while suppressing an increase in size of the wiper motor 1.

Further, in the above-mentioned first embodiment, the case in which the drive shaft 7 is assembled after the motor unit 4 and the speed reducer 5 are assembled with the motor housing 2 has been described. However, there is no limitation thereto, and the motor unit 4 and the speed reducer 5 may be assembled after the drive shaft 7 is assembled with the motor housing 2.

In addition, in the above-mentioned first embodiment, the case in which the inner teeth 6a of the transmission belt 6 and the pulley 65 function as the clutch mechanism configured to prevent an overload to the motor unit 4 has been described. However, there is no limitation thereto, and a separate clutch mechanism may be installed on any place on the power transmission system from the output shaft 58 to the drive shaft 7.

### (Second embodiment)

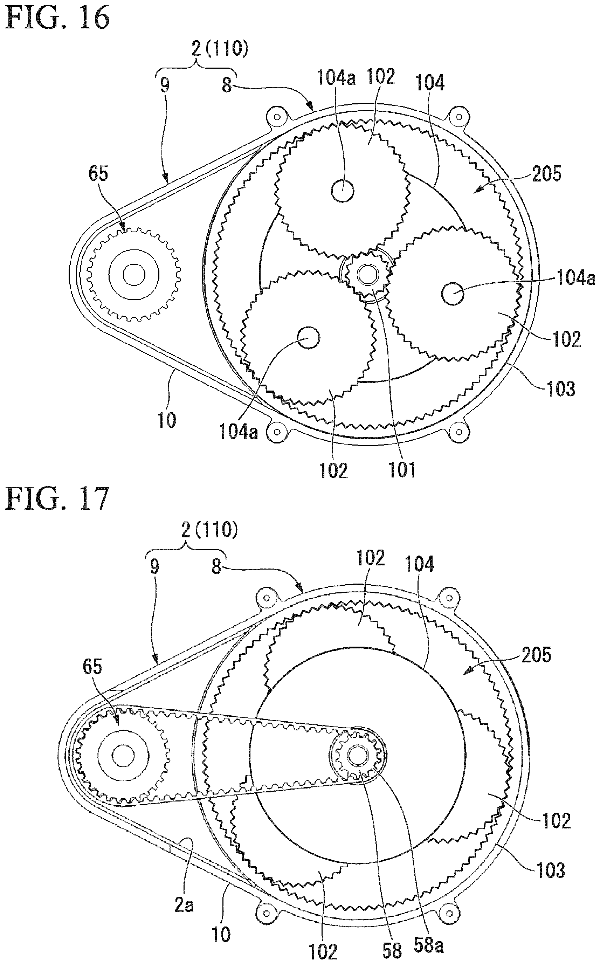

Next, a second embodiment will be described on the basis of Figs. 16 and 17.

Fig. 16 is a plan view showing a speed reducer 205 according to the second embodiment from the motor unit 4 side. Fig. 17 is a plan view showing the speed reducer 205 according to the second embodiment from the opening section 2a side of the motor housing 2. Further, in the second embodiment, elements that are the same as those of the above-mentioned first embodiment are designated by the same reference numerals and description thereof will be omitted (this also applies to subsequent embodiments).

As shown in Figs. 16 and 17, the second embodiment is distinguished from the first embodiment in that, while the speed reducer 5 of the first embodiment is constituted by the hypocycloid speed reducing mechanism, the speed reducer 205 of the second embodiment is constituted by a so-called planetary gear reduction mechanism.

More specifically, the speed reducer 205 is constituted by a sun gear 101 fitted and fixed onto the tip of the rotor boss 43 of the rotor 18 and rotated integrally with the rotor 18, a plurality of (for example, in the second embodiment, 3) planetary gears 102 that revolve about the sun gear 101, and an annular inner tooth ring gear 103 installed at an outer circumferential side of the planetary gears 102.

The plurality of planetary gears 102 are connected by a carrier plate 104 having substantially a disk shape. Support shafts 104a are vertically installed on the carrier plate 104 at positions corresponding to the planetary gears 102. The planetary gears 102 are rotatably supported by the support shafts 104a. In addition, the output shaft 58 is formed integrally with substantially a center of the carrier plate 104 in the radial direction at an opposite side of the planetary gears 102, i.e., on the side of the opening section 2a of the motor housing 2.

The inner tooth ring gear 103 is fixed to the speed reducer receiving section 8b of the motor housing 2. The inner tooth ring gear 103 is configured to be engageable with the plurality of planetary gears 102.

In such a configuration, when the sun gear 101 integrated with the rotor 18 is rotated, the rotation is transmitted to the carrier plate 104 via the plurality of planetary gears 102 in a reduced manner. When the carrier plate 104 is rotated, the output shaft 58 integrated with the carrier plate 104 is rotated.

Accordingly, according to the above-mentioned second embodiment, the same effects as in the above-mentioned first embodiment can be exhibited. In addition, the speed reducer 205 can be modified with respect to the speed reducer 5 in the above-mentioned first embodiment according to specifications. For this reason, variation of the wiper motor can be increased.

### (Third embodiment)

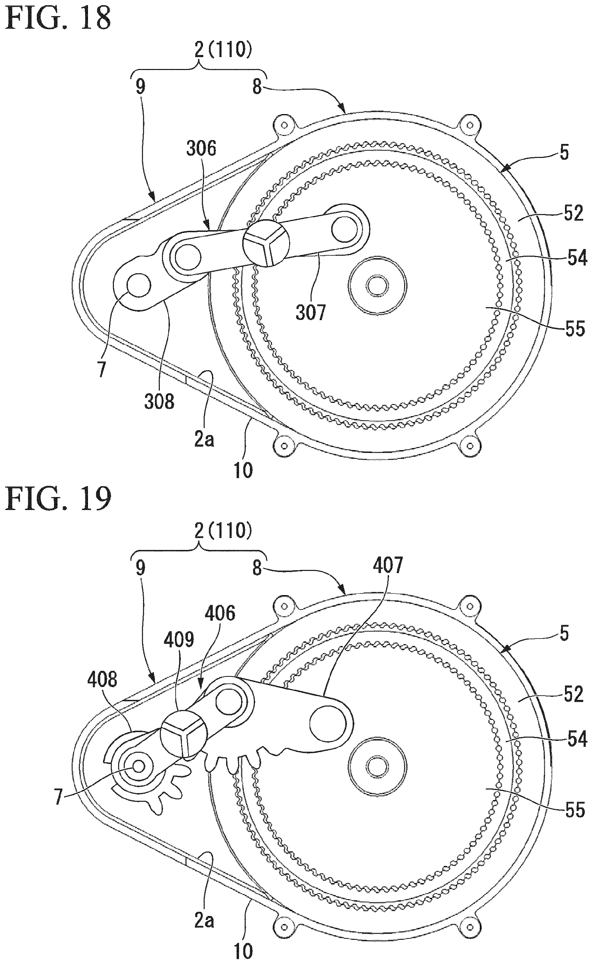

Next, a third embodiment will be described on the basis of Fig. 18.

Fig. 18 is a plan view showing a link mechanism 306 according to the third embodiment from the opening section 2a side of the motor housing 2.

As shown in Fig. 18, in the third embodiment, the link mechanism 306 is employed as a means configured to transmit power to the drive shaft 7 from the speed reducer 5, instead of the transmission belt 6 according to the above-mentioned first embodiment. In this case, the output shaft 58 is not installed on the drive gear 55 according to the third embodiment.

The link mechanism 306 includes a first arm 307 having one end pivotably connected to the drive gear 55 of the speed reducer 5, and a second arm 308 having one end attached to the drive shaft 7 and rotated integrally therewith. The other ends of the first arm 307 and the second arm 308 are pivotably connected.

The same effects as in the above-mentioned first embodiment can be exhibited in the above-mentioned configuration.

### (Fourth embodiment)

Next, a fourth embodiment will be described on the basis of Fig. 19.

Fig. 19 is a plan view showing a sector gear mechanism 406 according to the fourth embodiment from the opening section 2a side of the motor housing 2.

As shown in Fig. 19, in the fourth embodiment, the sector gear mechanism 406 is employed as a means configured to transmit power to the drive shaft 7 from the speed reducer 5, instead of the transmission belt 6 according to the above-mentioned first embodiment. In this case, the output shaft 58 is not installed on the drive gear 55 according to the fourth embodiment.

The sector gear mechanism 406 includes a sector gear 407 having one end pivotably connected to the drive gear 55 of the speed reducer 5, a pinion 408 fitted and fixed onto the drive shaft 7 and rotated integrally with the drive shaft 7, and a connecting plate 409 having one end rotatably connected to the drive shaft 7 and the other end rotatably connected to the sector gear 407.

A toothed section 407a that can be meshed with a toothed section 408a of the pinion 408 is formed on the other end of the sector gear 407. Then, a length of the connecting plate 409 is set such that a meshed state of the toothed sections 407a and 408a is maintained.

In this way, the same effects as in the above-mentioned first embodiment can be exhibited in the above-mentioned configuration.

Further, the present invention is not limited to the above-mentioned embodiments and various modifications may be applied to the above-mentioned embodiments

For example, the case in which the motor with the speed reducer shown in the above-mentioned embodiment is the wiper motor 1 mounted on the vehicle has been described. However, the above-mentioned wiper motor 1 can be applied to various apparatuses as the motor with the speed reducer. The scope of the invention is defined by the appended claims.

In addition, in the above-mentioned embodiments, the case in which, while the rotation axis of the rotor 18 of the motor unit 4 (the rotation axis of the rotor boss 43) and the rotation axis of the output shaft 58 are disposed coaxially, the drive shaft 7 is disposed to be parallel to the rotation axis of the rotor 18 and the rotation axis of the output shaft 58 has been described.

Further, in the above-mentioned embodiment, the case in which, while the sensor board 15 configured to perform rotation control of the motor unit 4 is installed in the motor housing 2, the operation driver 27 configured to supply current to the motor unit 4 or detect a rotation angle of the drive shaft 7 is installed on the housing cover 3 has been described. However, there is no limitation thereto, and a disposition place of the sensor board 15 and the operation driver 27 can be arbitrarily set according to specifications or a circumstance of the disposition space. Here, the terminals 28a, 28b and 28c can also be excluded as long as a layout that allows the terminals 19, 19b and 19c installed in the motor housing 2 to be directly inserted into the operation driver 27 is provided.

In addition, in the above-mentioned embodiment, the case in which connecting work between the terminals 19a, 19b and 19c and the winding 36 is performed via the knife switch 23 has been described. However, the structure capable of connecting the terminals 19a, 19b and 19c and the winding 36 may be provided, and the knife switch 23 may not be employed.

### [Industrial Applicability]

According to the above-mentioned motor with the speed reducer, the motor with the speed reducer and the wiper motor can be flattened and layout characteristics can be improved to an extent that the drive shaft and the output shaft are not arranged in the axial direction.

In addition, the board disposed in the first housing and the board disposed in the second housing can be easily electrically connected by the conduction section and the connecting section while the boards or the like are disposed in the first housing and the second housing.

Further, driving control of the motor with the speed reducer can be precisely performed by disposing, for example, the boards in the housings.

In addition, since the conduction section is laid, for example, the board and the winding drawn from the stator of the motor unit can also be connected via the conduction section. For this reason, since a degree of freedom of the winding in the drawing direction is increased, assembly workability of the motor with the speed reducer can be improved.

Further, one board can be miniaturized and layout characteristics can be increased to an extent that a plurality of (for example, 2) boards can be prepared. For this reason, there is no need to secure extra disposition space for disposing the boards, and the motor with the speed reducer can be miniaturized.

### [Reference Signs List]

1 Wiper motor (motor with speed reducer, rear wiper motor)
2 Motor housing
2a Opening section
4 Motor unit
5, 205 Speed reducer
6 Transmission belt
6a Inner teeth (clutch mechanism)
7 Drive shaft
10 Sidewall
10a Step difference section
18 Rotor
43 Rotor boss (motor shaft)
47 Restriction wall
48 Rotation restriction section (restriction section)
58 Output shaft
65 Pulley (clutch mechanism)
71 Restriction convex section (restriction section)

## Claims

1. A motor assembly with a speed reducer comprising:
a casing (110) divided into two parts including a box-shaped motor housing (2) having a first opening section (2a) formed in one surface thereof, and a housing cover (3) configured to cover the first opening section (2a);
a motor (4) received in the motor housing (2);
a speed reducer (5) received in the motor housing (2) and that is driven by receiving power from a motor shaft (43) of the motor (4) and that reduces rotation of the motor shaft (43) and outputs the reduced rotation to an output shaft (58);
a drive shaft (7) received in the motor housing (2), connected to the output shaft (58) of the speed reducer (5) via a power transmitter (6) and that drives a driven body;
a support shaft (12) that is installed on a bottom wall (2b) of the motor housing (2) and that is configured to rotatably support a rotor (18) of the motor (4); by being inserted into the motor shaft (43);
a cylindrical section (13) to which a stator of the motor is fixed and that is installed on the bottom wall (2b) of the motor housing (2) and that is vertically installed to surround the support shaft (12);
a second opening section (14) that is installed on the bottom wall (2b) of the motor housing (2) and that is curved in a fan shape so as to surround the cylindrical section (13);
a sensor board (15) that is attached to the second opening section (14) and that comprises a detection element (15a) configured to detect a rotation angle of the rotor (18); and
an operation driver (27) that is installed at a place which faces the drive shaft (7) on the opposite side of the drive shaft (7) compared to the sensor board (15), in the housing cover (3) and that is configured to drive and control the motor (4),
wherein the motor shaft (43) and the output shaft (58) are disposed coaxially, and
the output shaft (58) and the drive shaft (7) are disposed parallel to each other and apart in a radial direction.

2. The motor assembly with the speed reducer according to claim 1,
wherein the motor housing (2) is formed to be symmetrical with respect to an arbitrary straight line passing through an axis of the drive shaft (7) when seen from an axial direction of the drive shaft (7).

3. The motor assembly with the speed reducer according to claim 1 or 2, wherein
an inner side surface of the motor housing (2) is formed to have an opening area that is reduced from the first opening section (2a) toward the bottom wall (2b) via a step difference section, and
the motor (4), the speed reducer (5) and the power transmitter are sequentially received in the motor housing (2) from the bottom wall side.

4. The motor assembly with the speed reducer according to any one of claims 1 to 3,
wherein the motor (4) is constituted by a brushless motor.

5. The motor assembly with the speed reducer according to any one of claims 1 to 4,
wherein the speed reducer (5) is constituted by a hypocycloid mechanism.

6. The motor assembly with the speed reducer according to any one of claims 1 to 5,
wherein the power transmitter is constituted by a transmission belt (6).

7. The motor assembly with the speed reducer according to claim 6,
wherein a clutch mechanism is installed in at least one of a space between the power transmitter and the output shaft (58) and a space between the power transmitter and the drive shaft (7).

8. The motor assembly with the speed reducer according to claim 7,
wherein a toothed section (407a) is formed on an inner surface of the transmission belt,
a pulley (65) that is able to be meshed with the toothed section (407a) is formed integrally with the drive shaft (7), and
the toothed section (407a) of the transmission belt and the pulley (65) function as the clutch mechanism.

9. The motor assembly with the speed reducer according to claim 8,
wherein a restriction section (48) that restricts a range of a rotation angle of the pulley (65) is formed in at least one of the pulley (65) and the motor housing (2).

10. A rear wiper motor that comprises the motor assembly with the speed reducer according to any one of claims 1 to 9 in order to drive a rear wiper of a vehicle.

## Patentansprüche

1. Ein Motor mit einem Untersetzungsgetriebe, der umfasst:
ein Gehäuse (110), unterteilt in zwei Teile, das ein kastenförmiges Motorgehäuse (2) enthält, mit einem ersten Öffnungsabschnitt (2a), gebildet in einer seiner Flächen sowie eine Gehäuseabdeckung (3), die dazu konfiguriert ist, den ersten Öffnungsabschnitt (2a) abzudecken;
ein Motor (4), untergebracht im Motorgehäuse (2);
ein Untersetzungsgetriebe (5), untergebracht im Motorgehäuse (2) und angetrieben durch Empfang von Leistung von der Motorwelle (43) des Motors (4), das die Rotation der Motorwelle (43) verringert und die verringerte Rotation an eine Abtriebswelle (58) weitergibt;
eine Antriebswelle (7), untergebracht im Motorgehäuse (2), über einen Leistungs-Transmitter (6) verbunden mit einer Abtriebswelle (58) des Untersetzungsgetriebes (5), die einen angetriebenen Körper antreibt;
eine Trägerwelle (12), installiert an einer Bodenwand (2b) des Motorgehäuses (2) und dazu konfiguriert, einen Rotor (18) des Motors drehbar zu halten, indem sie in die Motorwelle (43) eingesetzt wird;
ein zylinderförmiger Abschnitt (13), an dem ein Stator des Motors befestigt ist und der in der Bodenwand (2b) des Motorgehäuses (2) installiert ist und der vertikal installiert ist, so dass er die Trägerwelle (12) umgibt;
ein zweiter Öffnungsabschnitt (14) installiert in der Bodenwand (2b) des Motorgehäuses (2) und in einer Fächerform gekrümmt ist, so dass er den zylinderförmigen Abschnitt (13) umgibt;
eine Sensorplatine (15), befestigt am zweiten Öffnungsabschnitt (14), die ein Detektionselement (15a) enthält, konfiguriert zur Erkennung eines Rotationswinkel des Rotors (18); und
ein Betriebstreiber (27), installiert an einer Stelle gegenüber der Antriebswelle (7) auf der im Vergleich mit der Sensorplatine (15) entgegengesetzten Seite der Antriebswelle (7) in der Gehäuseabdeckung (3) dazu konfiguriert, den Motor (4) anzutreiben und zu steuern,
wobei die Motorwelle (43) und die Abtriebswelle (58) koaxial angeordnet sind, und die Abtriebswelle (58) und die Antriebswelle (7) parallel zueinander und mit Abstand in radialer Richtung angeordnet sind.

2. Motorbaugruppe mit Untersetzungsgetriebe nach Anspruch 1,
wobei das Motorgehäuse (2) so geformt ist, dass es symmetrisch zu einer beliebigen geraden Linie ist, die durch eine Achse der Antriebswelle (7) führt, von einer axialen Richtung der Antriebswelle (7) aus gesehen.

3. Motorbaugruppe mit Untersetzungsgetriebe nach Anspruch 1 oder 2, wobei eine innere Seitenfläche des Motorgehäuses (2) so geformt ist, dass sie eine Öffnungsfläche aufweist, die vom ersten Öffnungsabschnitt (2a) zur Bodenwand (2b) hin über Stufenabschnitte verringert ist, und
der Motor (4), das Untersetzungsgetriebe (5) und der Leistungs- Transmitter sequentiell im Motorgehäuse (2) von der Bodenwandseite aus aufgenommen werden.

4. Motorbaugruppe mit Untersetzungsgetriebe nach irgendeinem der Ansprüche 1 bis 3, wobei der Motor (4) aus einem bürstenlosen Motor besteht.

5. Motorbaugruppe mit Untersetzungsgetriebe nach irgendeinem der Ansprüche 1 bis 4, wobei das Untersetzungsgetriebe (5) aus einem Hypozykloid- Mechanismus besteht.

6. Motorbaugruppe mit Untersetzungsgetriebe nach irgendeinem der Ansprüche 1 bis 5, wobei der Leistungs- Transmitter aus einem Treibriemen (6) besteht.

7. Motorbaugruppe mit Untersetzungsgetriebe nach Anspruch 6, wobei ein Kupplungsmechanismus in mindestens einem Raum zwischen dem Leistungs-Transmitter und der Abtriebswelle (58) und/ oder einem Raum zwischen dem Leistungs- Transmitter und der Antriebswelle (7) installiert ist.

8. Motorbaugruppe mit Untersetzungsgetriebe nach Anspruch 7, wobei ein gezahnter Abschnitt (407a) auf einer Innenfläche des Treibriemens gebildet ist, eine Riemenscheibe (65), die in der Lage ist, in den gezahnten Abschnitt (407a) zu greifen, ist vollständig innerhalb der Antriebswelle (7) gebildet, und der gezahnte Abschnitt (407a) des Treibriemens und der Riemenscheibe (65) funktioniert als Kupplungsmechanismus.

9. Motorbaugruppe mit Untersetzungsgetriebe nach Anspruch 8, wobei ein Begrenzungsabschnitt (48), der den Bereich eines Drehwinkels der Riemenscheibe (65) drosselt, in mindestens der Riemenscheibe (65) und/ oder dem Motorgehäuse (2) gebildet wird.

10. Ein hinterer Wischermotor, der eine Motorbaugruppe mit Untersetzungsgetriebe nach irgendeinem der Ansprüche 1 bis 9 enthält, um den hinteren Wischer eines Fahrzeugs anzutreiben.

## Revendications

1. Ensemble de moteur à réducteur de vitesse, comprenant :
un carter (110) divisé en deux parties, comprenant un logement de moteur en forme de boîtier (2) comportant une première section d'ouverture (2a) qui est formée dans une première surface de celui-ci, et un couvercle de logement (3) qui est configuré de manière à couvrir la première section d'ouverture (2a) ;
un moteur (4) qui est reçu dans un logement de moteur (2) ;
un réducteur de vitesse (5) qui est reçu dans le logement de moteur (2) et qui est entraîné en recevant de la puissance en provenance d'un arbre de moteur (43) du moteur (4) et qui réduit la rotation de l'arbre de moteur (43) et qui délivre la rotation réduite à un arbre de sortie (58) ;
un arbre d'entraînement (7) qui est reçu à l'intérieur du logement de moteur (2) et qui est connecté à l'arbre de sortie (58) du réducteur de vitesse (5) par l'intermédiaire d'un émetteur de puissance (6) et qui entraîne un corps entraîné ;
un arbre de support (12) qui est installé sur une paroi inférieure (2b) du logement de moteur (2) et qui est configuré de manière à supporter de façon rotative un rotor (18) du moteur (4) en étant inséré à l'intérieur de l'arbre de moteur (43) ;
une section cylindrique (13) à laquelle un stator du moteur est fixé et qui est installée sur la paroi inférieure (2b) du logement de moteur (2) et qui est installée verticalement de manière à entourer l'arbre de support (12) ;
une seconde section d'ouverture (14) qui est installée sur la paroi inférieure (2b) du logement de moteur (2) et qui est incurvée en forme d'éventail de manière à entourer la section cylindrique (13) ;
une carte de capteur (15) qui est attachée à la seconde section d'ouverture (14) et qui comprend un élément de détection (15a) qui est configuré de manière à détecter un angle de rotation du rotor (18) ; et
un pilote de commande (27) qui est installé en un endroit qui fait face à l'arbre d'entraînement (7) sur le côté opposé de l'arbre d'entraînement (7) comparativement à la carte de capteur (15), dans le couvercle de logement (3) et qui est configuré de manière à entraîner et à commander le moteur (4),
dans lequel l'arbre de moteur (43) et l'arbre de sortie (58) sont disposés de façon coaxiale, et
l'arbre de sortie (58) et l'arbre d'entraînement (7) sont disposés parallèles l'un à l'autre et espacés dans une direction radiale.

2. Ensemble de moteur à réducteur de vitesse selon la revendication 1, dans lequel le logement de moteur (2) est formé de manière à être symétrique par rapport à une ligne droite arbitraire qui passe à travers un axe de l'arbre d'entraînement (7) lorsque l'on regarde à partir d'une direction axiale de l'arbre d'entraînement (7).

3. Moteur à réducteur de vitesse selon la revendication 1 ou 2, dans lequel une surface latérale intérieure du logement de moteur (2) est formée de manière à présenter une région d'ouverture qui est réduite à partir de la section d'ouverture (2a) en direction de la paroi inférieure (2b) par l'intermédiaire d'une section de différence de pas, et
le moteur (4), le réducteur de vitesse (5) et l'émetteur de puissance sont reçus de façon séquentielle à l'intérieur du logement de moteur (2) à partir du côté de paroi inférieure.

4. Ensemble de moteur à réducteur de vitesse selon l'une quelconque des revendications 1 à 3, dans lequel le moteur (4) est constitué par un moteur sans balai.

5. Ensemble de moteur à réducteur de vitesse selon l'une quelconque des revendications 1 à 4, dans lequel le réducteur de vitesse (5) est constitué par un mécanisme hypocycloïde.

6. Ensemble de moteur à réducteur de vitesse selon l'une quelconque des revendications 1 à 5, dans lequel l'émetteur de puissance est constitué par une courroie de transmission (6).

7. Ensemble de moteur à réducteur de vitesse selon la revendication 6, dans lequel un mécanisme d'embrayage est installé dans au moins un espace parmi un espace entre l'émetteur de puissance et l'arbre de sortie (58) et un espace entre l'émetteur de puissance et l'arbre d'entraînement (7).

8. Ensemble de moteur à réducteur de vitesse selon la revendication 7, dans lequel une section dentée (407a) est formée sur une surface intérieure de la courroie de transmission,
une poulie (65) qui est capable d'être engrenée avec la section dentée (407a) est formée intégralement avec l'arbre d'entraînement (7), et
la section dentée (407a) de la courroie de transmission et la poulie (65) fonctionnent de concert pour former le mécanisme d'embrayage.

9. Ensemble de moteur à réducteur de vitesse selon la revendication 8, dans lequel une section de limitation (48) qui limite une plage d'un angle de rotation de la poulie (65) est formée dans au moins un élément parmi la poulie (65) et le logement de moteur (2).

10. Moteur d'essuie-glace arrière comprenant l'ensemble de moteur à réducteur de vitesse selon l'une quelconque des revendications 1 à 9 dans le but d'entraîner un essuie-glace arrière d'un véhicule.
